# FASCICULE DE BREVET EUROPEEN

(11) **EP 0 558 431 B1**
(45) Date de publication et mention de la délivrance du brevet: **22.01.1997**
(21) Numéro de dépôt: 93440023.5
(22) Date de dépôt: 25.02.1993
(51) Int. Cl.: A01D 75/20

(54) **Faucheuse avec un organe de protection perfectionné**
Mähmaschine mit einem verbesserten Schutzorgan
Mower with an improved protecting element

(30) Priorité: 28.02.1992 FR 9202635
(43) Date de publication de la demande: 01.09.1993
(73) Titulaire: KUHN S.A., F-67700 Saverne (FR)
(72) Inventeur: Wolff, Michel, F-67670 Waltenheim Sur Zorn (FR)

(56) Documents cités:
- EP-A- 0 083 460
- EP-A- 0 356 358
- EP-A- 0 451 074
- GB-A- 1 267 574
- US-A- 3 593 504

## Description

La présente invention concerne une faucheuse comportant :
- une structure d'attelage destinée à être liée au dispositif d'attelage d'un véhicule moteur ;
- un mécanisme de coupe s'étendant, au travail, transversalement à la direction de travail et comprenant des organes de coupe ainsi qu'une structure porteuse qui est implantée, en vue suivant la direction de travail (15), au-dessus desdits organes de coupe ;
- une poutre-support liée d'une part à la structure d'attelage à l'aide d'une première articulation d'axe géométrique dirigé vers l'avant et d'autre part au mécanisme de coupe à l'aide d'une deuxième articulation d'axe géométrique dirigé vers l'avant ;
- un organe de manoeuvre servant à amener le mécanisme de coupe dans une position relevée de transport par pivotement autour de l'axe géométrique de la deuxième articulation ;
- un organe de protection servant, dans une position de travail, à masquer les organes de coupe et comportant deux parties, une partie supérieure relativement rigide articulée à la structure porteuse du mécanisme de coupe au moyen d'une troisième articulation d'axe géométrique dirigé au moins sensiblement suivant l'axe longitudinal de ladite structure porteuse, et une partie frontale liée à l'avant de la partie supérieure ;
et
- au moins un élément de manoeuvre destiné à amener l'organe de protection de sa position de travail dans une position de transport, ledit élément de manoeuvre ou l'un au moins desdits éléments de manoeuvre étant agencé de façon à pivoter, lors de la mise en position de transport, ladite partie supérieure autour de l'axe géométrique de ladite troisième articulation pour réduire l'encombrement de l'organe de protection.

Une telle faucheuse est décrite dans le document **EP-A-0 083 460**. Cette faucheuse connue comporte un cadre d'attelage destiné à être attelé au dispositif de relevage à trois points d'un tracteur. Une poutre porteuse est liée au cadre de façon à pouvoir pivoter par rapport à ce cadre autour d'un premier tourillon dont l'axe géométrique s'étend sensiblement horizontalement dans la direction d'avance. L'extrémité extérieure de la poutre porteuse est munie d'une barre de coupe qui, comme la poutre porteuse, est dirigée transversalement à la direction d'avance et s'étend au-delà du côté du tracteur. La barre de coupe peut pivoter vers le haut et vers le bas par rapport à la poutre porteuse autour d'un deuxième tourillon dont l'axe géométrique est parallèle à l'axe géométrique du premier tourillon. Un organe de manoeuvre est prévu pour amener la barre de coupe dans une position verticale de transport par pivotement autour de l'axe géométrique du deuxième tourillon. La poutre porteuse est également susceptible de pivoter par rapport au cadre autour d'un axe vertical. En travail normal, ce pivotement est cependant condamné par un organe de retenue.

Au-dessus de la barre de coupe est prévue une structure porteuse portant un organe de protection. Cet organe de protection comporte un cadre porteur tubulaire relativement rigide sur lequel est tendue une toile de protection. A l'avant de la structure porteuse, le cadre porteur tubulaire comporte un volet. Ce volet s'étend horizontalement au travail et est lié au reste du cadre porteur tubulaire (c'est-à-dire indirectement à la structure porteuse) au moyen d'une troisième articulation d'axe géométrique dirigé sensiblement suivant l'axe longitudinal de la structure porteuse. Le maintien du volet dans sa position horizontale de travail est assuré par un ressort de traction. La toile de protection, quant à elle, est en appui sur le bord frontal dudit volet et comporte une partie frontale qui pend sensiblement verticalement vers le bas.

La faucheuse connue comporte encore un élément de manoeuvre agencé entre la poutre porteuse et le volet. Ainsi, lorsque la barre de coupe équipée de son organe de protection, est pivotée autour de l'axe géométrique du deuxième tourillon, vers le haut, dans sa position de transport, l'élément de manoeuvre pivote le volet et la partie frontale de la toile de protection, autour de l'axe géométrique de la troisième articulation en direction des organes de coupe de la barre de coupe.

Lors de la mise en position de transport, le volet de l'organe de protection est ainsi pivoté dans une seconde position opérationnelle, c'est-à-dire une position dans laquelle il continue de remplir, d'une certaine manière, sa fonction de protection.

Du reste, en position de transport, l'encombrement de l'avant de l'organe de protection est réduit d'une certaine distance ce qui permet de positionner la faucheuse plus près du tracteur.

Etant donné qu'en position de transport, le volet et la partie frontale de la toile de protection sont pivotés, en direction des organes de coupe, dans leur seconde position opérationnelle, le champ de vision arrière du conducteur du tracteur est réduit et une partie des éléments de signalisation dudit tracteur peut être masquée. De surcroît, la partie frontale de la toile de protection flotte au vent, ce qui n'est pas souhaitable, notamment du point de vue esthétique.

Le but de l'invention est de remédier à ces inconvénients.

A cet effet, la faucheuse selon l'invention est caractérisée en ce que :
a) la partie frontale est également relativement rigide ;
b) elle est articulée à l'avant de la partie supérieure à l'aide d'une quatrième articulation d'axe géométrique au moins sensiblement parallèle à l'axe géométrique de la troisième articulation ;
c) l'élément de manoeuvre ou l'un au moins desdits éléments de manoeuvre est agencé de façon à pivoter, lors de la mise en position de transport, la partie frontale autour de l'axe géométrique de la quatrième articulation vers la partie supérieure.

Etant donné que la partie frontale de l'organe de protection est également relativement rigide, l'avant de la toile de protection qui en fait partie, ne flotte plus au vent.

Comme, de surcroît, cette partie frontale de l'organe de protection est pivotée, lors de la mise en position de transport, vers la partie supérieure de l'organe de protection, ce dernier présente un encombrement tellement réduit en position de transport que le champ de vision arrière du conducteur du véhicule moteur est substantiellement élargi et que les éléments de signalisation dudit véhicule moteur peuvent également être mieux vus par les automobilistes qui le suivent. Le transport s'effectue ainsi dans de meilleures conditions de sécurité.

Dans une réalisation préférentielle, la partie supérieure s'étend, au travail, au moins sensiblement horizontalement alors que la partie frontale pend au moins sensiblement verticalement vers le bas. Au transport, par contre, la partie supérieure est pivotée vers la poutre-support.

Avantageusement, l'axe géométrique de la troisième articulation pourra s'étendre, en vue de dessus, au moins sensiblement dans le prolongement de la poutre-support.

Il pourra également être prévu que lesdites parties de l'organe de protection soient amenées de leur position de travail dans leur position de transport au moyen d'au moins deux éléments de manoeuvre.

Un premier élément de manoeuvre pourra être implanté entre la partie supérieure de l'organe de protection et la poutre-support. Ce premier élément de manoeuvre pourra, en particulier, être lié à l'extrémité de la partie supérieure de l'organe de protection en regard de la poutre-support en un point de liaison implanté, en vue de dessus, entre les axes géométriques desdites première et deuxième articulations.

Un deuxième élément de manoeuvre pourra, quant à lui, être implanté entre la partie frontale de l'organe de protection et la structure porteuse de l'organe de protection. Ce deuxième élément de manoeuvre pourra être avantageusement implanté au moins sensiblement aux trois quarts de la hauteur de la partie frontale de l'organe de protection et s'étendre au moins sensiblement suivant la direction de travail.

Il pourra aussi être prévu que ledit élément de manoeuvre ou l'un au moins desdits éléments de manoeuvre comporte un câble et/ou un élément élastiquement déformable. De tels éléments de manoeuvre sont généralement d'un montage facile et d'un prix de revient particulièrement réduit. De surcroît, lesdits éléments élastiquement déformables autorisent des tolérances de fabrication et de montage assez larges.

En outre, il pourra encore être prévu que l'organe de protection soit amené automatiquement de sa position de travail dans sa position de transport lors du relevage du mécanisme de coupe.

Par ailleurs, au transport, l'organe de protection laissera, de préférence, apparaître la partie frontale des organes de coupe, qui s'étend en-dehors de la voie du véhicule moteur. Le conducteur du véhicule moteur pourra ainsi, à tout moment, voir dans son rétroviseur ladite partie frontale des organes de coupe.

Pour amener le mécanisme de coupe dans sa position relevée de transport par pivotement autour de l'axe géométrique de la deuxième articulation, il pourra être avantageusement prévu que l'organe de manoeuvre comporte un vérin s'étendant entre la structure d'attelage et le mécanisme de coupe.

Il pourra également être prévu que la première articulation puisse être pivotée par rapport à la structure d'attelage autour d'un axe géométrique supplémentaire dirigé vers le haut. Il sera ainsi possible de pivoter le mécanisme de coupe vers le plan médian du véhicule moteur et d'éviter que ledit mécanisme de coupe ne s'étende trop loin en-dehors de la voie du tracteur au cours du transport.

Dans une réalisation particulièrement intéressante, il pourra aussi être prévu que la poutre-support soit liée à la structure d'attelage au moyen d'un bras de positionnement et d'un organe de retenue, l'ensemble formant, en vue de dessus, un quadrilatère déformable permettant, en vue du transport, de ramener la poutre-support vers le plan médian du véhicule moteur tout en pivotant ladite poutre-support vers l'arrière.

Cette faucheuse pourra être une faucheuse à disques avec ou sans organes de traitement du produit coupé.

D'autres caractéristiques de l'invention apparaissent dans la description suivante d'un exemple non limitatif de réalisation faite en référence au dessin annexé sur lequel :
- la figure 1 représente, en position de travail, une faucheuse selon l'invention vue de l'arrière dans le sens d'avance au travail et liée à un véhicule moteur ;
- la figure 2 représente une vue de dessus de la faucheuse de la figure 1 toujours en position de travail ;
- la figure 3 représente une vue latérale, partiellement en coupe, du mécanisme de coupe suivant la flèche III de la figure 2 ;
et
- la figure 4 représente une vue de dessus, partiellement en coupe, de la faucheuse de la figure 1 en position de transport.

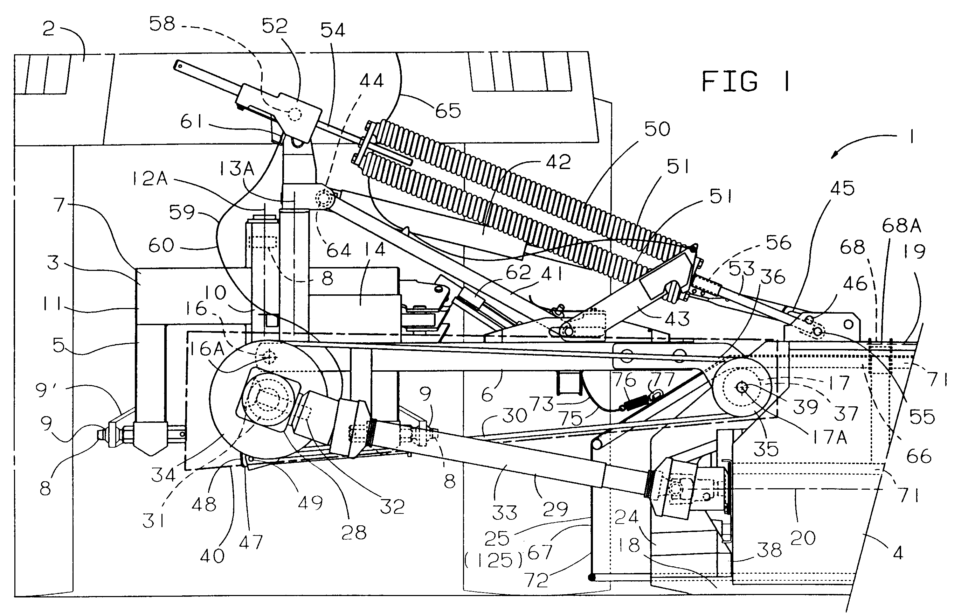

Sur les figures 1 à 4 apparaît une faucheuse (1) selon l'invention. Celle-ci est liée à un tracteur agricole (2).

Cette faucheuse (1) se compose principalement d'un châssis (3) comportant une structure d'attelage (5) et une poutre-support (6), et d'un mécanisme de récolte (4).

La structure d'attelage (5) comporte un portique (7) muni, à sa partie frontale, de trois points d'attelage (8) destinés à être liés aux trois points d'attelage (9) du dispositif de relevage (9') du tracteur agricole (2). Entre le portique (7) et la poutre-support (6) est implanté un bras de positionnement (10) servant à ramener la poutre-support (6) et le mécanisme de récolte (4) vers le plan médian du tracteur (2), afin d'en faciliter le transport. A cet effet, le bras de positionnement (10) de la structure d'attelage (5) est lié d'une part au moins sensiblement au milieu de la poutre supérieure (11) du portique (7) au moyen d'une articulation cylindrique (12) d'axe géométrique (12A) au moins sensiblement vertical, et d'autre part dans le voisinage de l'extrémité longitudinale intérieure de la poutre-support (6) à l'aide d'un tourillon (13) d'axe géométrique (13A) au moins sensiblement vertical.

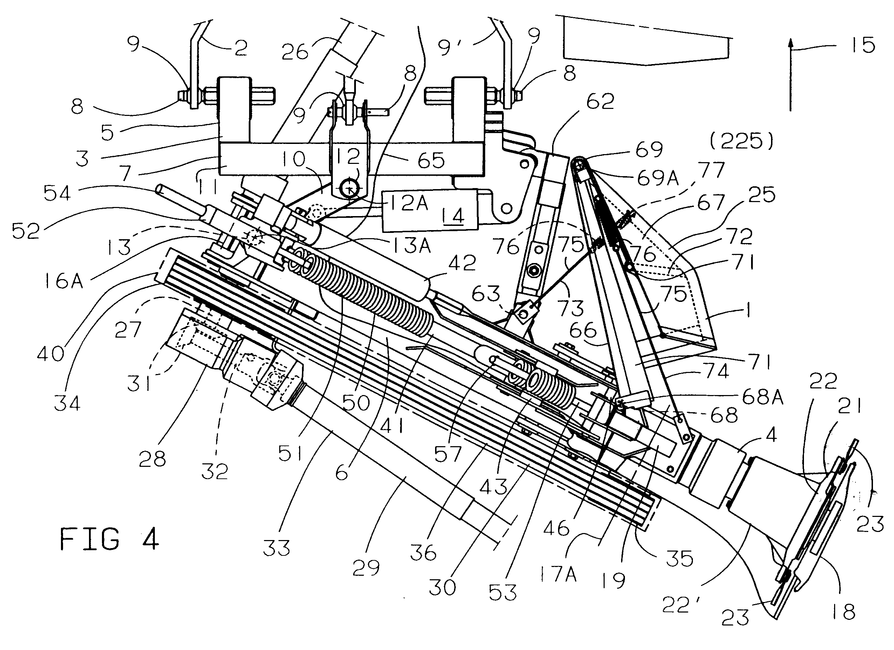

Un organe de positionnement (14), réalisé sous forme d'un vérin hydraulique, est implanté entre le bras de positionnement (10) et l'extrémité du portique (7) en regard du mécanisme de récolte (4). De cette manière, ledit organe de positionnement (14) permet de pivoter le bras de positionnement (10) autour de l'axe géométrique (12A) de l'articulation cylindrique (12) d'une position de travail (figures 1 à 3) dans laquelle il s'étend au moins sensiblement suivant la direction de travail (15), vers une position de transport (figure 4) dans laquelle ledit bras de positionnement (10) est au moins sensiblement parallèle à la poutre supérieure (11) du portique (7).

La poutre-support (6), quant à elle, s'étend, en vue de dessus lors du travail, transversalement à la direction de travail (15) et juste derrière la structure d'attelage (5). A son extrémité longitudinale intérieure, la poutre-support (6) est articulée à la partie inférieure du tourillon (13) au moyen d'une première articulation du type pivot (16) d'axe géométrique (16A) dirigé vers l'avant et s'étendant, en vue suivant la direction d'avance (15) au travail, au moins sensiblement dans le voisinage du centre du triangle défini par les trois points d'attelage (8) de la structure d'attelage (5). A son extrémité longitudinale extérieure, la poutre-support (6) du châssis (3) est articulée à l'extrémité longitudinale intérieure (24) du mécanisme de récolte (4) au moyen d'une deuxième articulation du type pivot (17) d'axe géométrique (17A) dirigé vers l'avant. Cette deuxième articulation (17) est implantée à la partie supérieure du mécanisme de récolte (4) de sorte que, durant le travail, les axes géométriques (16A, 17A) des deux articulations (16, 17) correspondantes s'étendent au moins sensiblement au même niveau; la poutre-support (6) est ainsi dirigée au moins sensiblement horizontalement. Grâce à ce châssis (3), le mécanisme de récolte (4) peut s'étendre, lors du travail, à côté de la voie du tracteur (2) et s'adapter aisément au relief du sol.

Comme représenté sur les figures 1 à 4, le mécanisme de récolte (4) comporte notamment une barre de coupe (18), une structure porteuse (19) et un rotor de traitement (20) dont on ne voit que l'axe de rotation. La barre de coupe (18) est équipée d'une pluralité d'organes de coupe (21) comportant des disques (22) munis à leur périphérie d'outils de coupe (23). Au travail, ces disques (22) tournent autour d'axes géométriques dirigés vers le haut. De plus, d'une manière connue de l'homme de l'art, les disques (22) qui s'étendent chacun à une extrémité longitudinale de la barre de coupe (18), sont surmontés d'un tambour (22') tournant autour du même axe géométrique que le disque (22) qu'il surmonte. Ces deux tambours (22') calibrent le flux de produit coupé par les organes de coupe (21).

Au-dessus de la barre de coupe (18) s'étend par ailleurs la structure porteuse (19) qui est notamment destinée à supporter un organe de protection (25) qui sera décrit plus en détail ultérieurement. Cette structure porteuse (19) est liée à la barre de coupe (18) au moyen de deux parois latérales (38) s'étendant vers le bas.

Le rotor de traitement (20), connu de l'homme de l'art, s'étend derrière la barre de coupe (18) et au moins sensiblement parallèlement à l'axe longitudinal de ladite barre de coupe (18). Ce rotor de traitement (20) est guidé en rotation, dans le voisinage de ses extrémités longitudinales, dans les parois latérales (38) de la structure porteuse (19) et est destiné à conditionner le produit coupé par les organes de coupe (21).

L'entraînement en rotation du rotor de traitement (20) et des organes de coupe (21) de la barre de coupe (18) s'effectue à partir de la prise de force (non représentée) du tracteur (2) auquel est attelée la faucheuse (1). En effet, la prise de force entraîne, par l'intermédiaire d'un arbre télescopique à joints universels (26), l'arbre d'entrée (27) d'un carter de renvoi (28). Cet arbre d'entrée (27) transmet le mouvement de rotation d'une part au rotor de traitement (20) au moyen d'organes d'entraînement (29) et d'autre part aux disques (22) de la barre de coupe (18) à l'aide d'organes de transmission (30).

Pour communiquer le mouvement de l'arbre d'entrée (27) du carter de renvoi (28) au rotor de traitement (20), les organes d'entraînement (29) comportent successivement un couple de pignons coniques (31) dont l'un est solidaire dudit arbre d'entrée (27) et l'autre de l'arbre de sortie (32) du carter de renvoi (28), et un arbre télescopique à joints universels (33) s'étendant transversalement à la direction de travail (15). Cet arbre télescopique à joints universels (33) communique le mouvement de rotation de l'arbre de sortie (32) du carter de renvoi (28) au rotor de traitement (20) dont l'extrémité longitudinale traverse, à cet effet, la paroi latérale intérieure (38) de la structure porteuse (19).

La transmission du mouvement de rotation de l'arbre d'entrée (27) du carter de renvoi (28) aux disques (22) de la barre de coupe (18) est réalisée, comme dit précédemment, par des organes de transmission (30). Ceux-ci comportent principalement une paire de poulies (34, 35) sur lesquelles s'enroulent des courroies (36), et un carter de renvoi (37) au moyen duquel la structure porteuse (19) du mécanisme de récolte (4) est liée à la poutre-support (6).

Le carter de renvoi (37) est en effet muni de deux portées cylindriques matérialisant la deuxième articulation (17) et réalisées sous forme de paliers dans lesquels est guidé en rotation un arbre d'entrée (39) dont l'axe de rotation est confondu avec l'axe géométrique (17A) de ladite deuxième articulation (17). C'est au moyen de cet arbre d'entrée (39) que les disques (22) et les tambours (22') de la barre de coupe (18) sont entraînés en rotation.

A l'arrière, l'arbre d'entrée (39) s'étend au-dehors du carter de renvoi (37) et porte l'une (35) des poulies (34, 35) des organes de transmission (30). L'autre poulie (34) est portée par l'arbre d'entrée (27) du carter de renvoi (28) qui est implanté dans le voisinage de la structure d'attelage (5). La transmission du mouvement de cette poulie (34) à la poulie (35) est assurée par les courroies (36) qui s'enroulent sur lesdites poulies (34, 35). Un capot de protection (40) (représenté en traits mixtes) entoure partiellement les poulies (34, 35) et les courroies (36).

Comme le montrent plus particulièrement les figures 1, 2 et 4, le châssis (3) comporte aussi un limiteur (41). Ce limiteur (41) est lié d'une part à la structure d'attelage (5) au moyen d'une articulation (64) (figure 1) présentant un axe géométrique au moins sensiblement parallèle à l'axe géométrique (16A) de la première articulation (16) alors que ledit limiteur (41) est lié d'outre part de manière coulissante à la poutre-support (6). Le limiteur (41) sert à limiter le pivotement de la poutre-support (6) autour de l'axe gé métrique (16A) de la première articulation (16) et, de ce fait, le déplacement, vers le bas, de la deuxième liaison pivot (17) qui lie le mécanisme de récolte (4) à la poutre-support (6). L'utilisateur peut donc, en vue du transport sur le champ, actionner le dispositif de relevage (9') du tracteur (2) de sorte à allonger au maximum le limiteur (41) et à soulever le mécanisme de récolte (4).

Pour soulever le mécanisme de récolte (4) dans sa totalité, il est encore prévu un vérin de relevage (42). Ce vérin de relevage (42) est articulé à l'une de ses extrémités longitudinales près de l'extrémité supérieure du tourillon (13) de la structure d'attelage (5) au moyen d'une articulation (44) dont l'axe géométrique s'étend au moins sensiblement parallèlement à l'axe géométrique (16A) de la première articulation (16).

A son autre extrémité longitudinale, le vérin de relevage (42) présente un trou oblong (45) (figure 1) traversé par un axe (46) dirigé au moins sensiblement suivant la direction de travail (15) et fixé à la structure porteuse (19) du mécanisme de récolte (4). Au travail, l'axe (46) s'étend normalement au milieu du trou oblong (45) et ne gêne donc pas le déplacement en hauteur du mécanisme de récolte (4), ni son pivotement autour de l'axe géométrique (17A) de la deuxième articulation (17). De plus, lorsque l'utilisateur désire placer la faucheuse (1) dans sa position andain en actionnant le relevage hydraulique (9') du tracteur (2), le châssis (3) ainsi que l'extrémité supérieure du vérin de relevage (42) se déplacent vers le haut, ce qui amène l'extrémité inférieure du trou oblong (45) contre l'axe (46) du mécanisme de récolte (4). A partir de ce moment, le mécanisme de récolte (4) ne peut plus pivoter autour de l'axe géométrique (17A) de la deuxième articulation (17) et s'éloigne du sol. Une fois dans sa position andain, la faucheuse (1) peut alors être placée dans sa position de transport grâce au vérin de positionnement (14) qui ramène le mécanisme de récolte (4) vers le plan médian du tracteur (2), et au vérin de relevage (42) qui permet de pivoter le mécanisme de récolte (4) dans une position relevée de transport (figure 4).

Au transport, la partie frontale des organes de coupe (21) s'étend en-dehors de la voie du tracteur (2). Un dispositif de verrouillage (43) sert à verrouiller simultanément le mécanisme de récolte (4) dans sa position relevée de transport et à bloquer la liaison coulissante du limiteur (41) par rapport à la poutre-support (6). A l'inverse, une commande à distance (65) permet à l'utilisateur de déverrouiller le dispositif de verrouillage (43) depuis la cabine du tracteur (2).

Lors de la dépose de cette faucheuse (1), le mécanisme de récolte (4) repose longitudinalement sur le sol et la poutre-support (6) est supportée par un organe de dépose (47) (figure 1). Dans cet exemple de réalisation, l'organe de dépose (47) est une béquille (48) liée à la poutre-support (6) dans le voisinage de la première articulation (16) à l'aide d'une articulation cylindrique (49) d'axe géométrique au moins sensiblement parallèle à l'axe géométrique (16A) de ladite première articulation (16). De ce fait, la béquille (48) peut, en vue de la dépose, être pivotée d'une position escamotée dans une position de dépose dans laquelle la béquille (48) est destinée à supporter la poutre-support (6).

Dans la position de dépose, il est également possible de pivoter la structure d'attelage (5) par rapport à la poutre-support (6) autour de l'axe géométrique (16A) de la première articulation (16). Un tel agencement facilite substantiellement l'attelage de la faucheuse (1) aux trois points d'attelage (9) du tracteur (2).

La faucheuse (1) comporte encore un organe de délestage (50) destiné à délester le mécanisme de récolte (4) au travail. Cet organe de délestage (50) s'étend entre l'extrémité supérieure du tourillon (13) de la structure d'attelage (5) et l'extrémité intérieure de la structure porteuse (19). L'organe de délestage (50) se compose principalement de deux ressorts de traction (51) associé à un dispositif de commande (52). Les deux ressorts de traction (51) sont liés d'une part à la structure porteuse (19) du mécanisme de récolte (4) au moyen d'un premier tirant (53) et d'autre part au dispositif de commande (52) au moyen d'un deuxième tirant (54). Le premier tirant (53) est articulé, à l'une de ses extrémités, à la structure porteuse (19) du mécanisme de récolte (4) au moyen d'un axe (55) dirigé au moins sensiblement parallèlement à l'axe géométrique (17A) de la deuxième articulation (17). A son autre extrémité, le premier tirant (53) est lié au groupe de ressorts (51) à l'aide d'une liaison glissière (56) (figure 1), le coulissement, vers l'extérieur, dudit premier tirant (53) par rapport au groupe de ressorts (51) étant limité par une butée (57) (figure 4) que comporte ledit premier tirant (53).

Le dispositif de commande (52), quant à lui, est articulé au tourillon (13) à l'aide d'une articulation cylindrique (58) (figure 1) d'axe géométrique au moins sensiblement parallèle à l'axe géométrique (16A) de la première articulation (16). Dans cette réalisation, l'articulation cylindrique (58) s'étend au-dessus de l'articulation (44) liant le vérin de relevage (42) à ladite structure d'attelage (5).

Le dispositif de commande (52) qui est connu de l'homme de l'art, permet d'annuler l'action des ressorts de traction (51) en vue de la dépose de sorte à autoriser, comme dit précédemment, le pivotement de la structure d'attelage (5) autour de l'axe géométrique (16A) de la première articulation (16). A cet effet, le dispositif de commande (52) comporte une commande à distance (59) qui comporte une gaine (60) à l'intérieur de laquelle peut être translaté un câble (non représenté) lié d'une part à la béquille (48) et d'autre part à une butée escamotable (61) du dispositif de commande (52). De ce fait, dès que la béquille (48) est déplacée de sa position escamotée vers sa position de dépose, elle agit sur le dispositif de commande (52) et annule l'action des ressorts de traction (51) par escamotage de la butée (61).

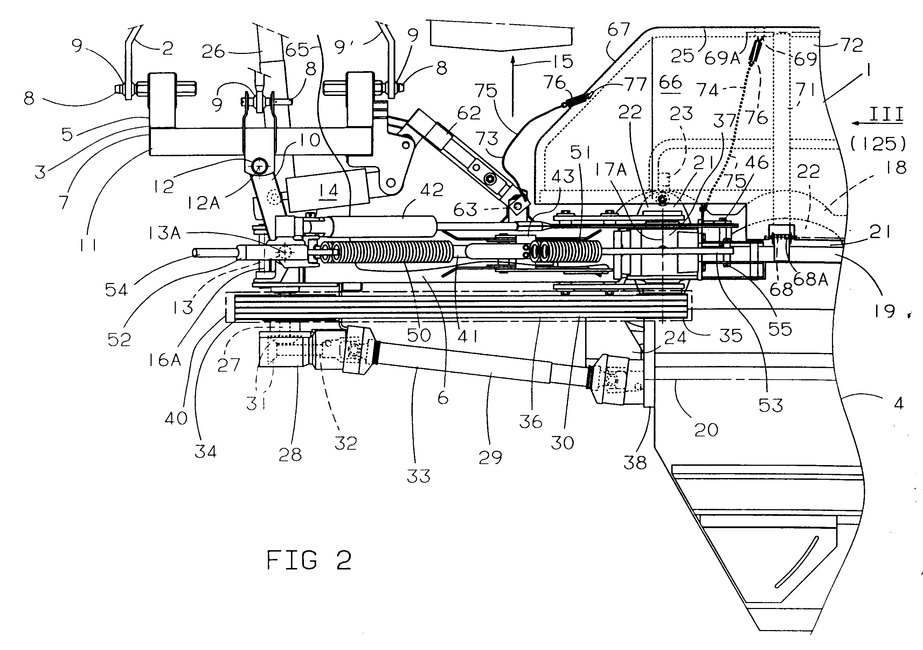

Cette faucheuse (1) comporte encore un organe de retenue (62) implanté entre la poutre-support (6) et la structure d'attelage (5) et empêchant, dans les conditions normales de travail, le pivotement de la poutre-support (6) autour de l'axe géométrique (13A) du tourillon (13). Vue suivant la direction de travail (15), la liaison (63) (figure 2) de l'organe de retenue (62) à la poutre-support (6) s'étend au moins sensiblement au même niveau que l'axe géométrique (16A) de la première articulation (16) et environ aux deux tiers de la distance séparant l'axe géométrique (16A) de la première articulation (16) de l'axe géométrique (17A) de la deuxième articulation (17). Par ailleurs, ladite liaison (63) est implantée de telle sorte qu'au travail l'organe de retenue (62) ait une forte inclinaison vers le haut et vers l'avant.

L'extrémité intérieure (24) du mécanisme de récolte (4) est délestée à la fois par l'organe de délestage (50) et, de manière dynamique, gráce à l'inclinaison de l'organe de retenue (62). Le délestage de l'extrémité extérieure du mécanisme de récolte (4) est, quant à lui, assuré par l'organe de délestage (50) qui créé un couple autour de l'axe géométrique (17A).

De plus, étant donné que l'organe de retenue (62) n'est soumis à aucun effort lorsque la faucheuse (1) est dans sa position de dépose, l'attelage et la dépose de ladite faucheuse (1) sont simplifiés. En effet, dans la position de dépose, l'organe de retenue (62) autorise le pivotement de la structure d'attelage (5) par rapport à la poutre-support (6) autour de l'axe géométrique (16A) de la première articulation (16).

L'organe de protection (25) selon l'invention comporte deux parties (66, 67) : une partie supérieure (66) et une partie frontale (67). La partie supérieure (66) s'étend, au travail, au inoins sensiblement horizontalement devant la structure porteuse (19) à laquelle elle est liée au moyen d'une troisième articulation (68) du type pivot d'axe géométrique (68A) au moins sensiblement parallèle à l'axe longitudinal de la structure porteuse (19). Cet axe géométrique (68A) s'étend, en vue de dessus, au moins sensiblement dans le prolongement de la poutre-support (6). La partie frontale (67), quant à elle, est liée à l'avant de ladite partie supérieure (66) à l'aide d'au moins une quatrième articulation (69) du type pivot d'axe géométrique (69A) au moins sensiblement parallèle à l'axe géométrique (68A) de ladite troisième articulation (68) et s'étend, au travail, au moins sensiblement verticalement vers le bas jusque dans le voisinage du plan de coupe (70) des organes de coupe (21).

Comme visible sur les figures, chacune de ces deux parties (66, 67) comporte une structure-support (71) relativement rigide recouverte d'une toile de protection (72). De cette sorte, les organes de coupe (21) sont parfaitement masqués par l'organe de protection (25) durant le travail (figures 1 à 3).

Cependant, en vue du transport, l'organe de protection (25) peut aussi être rapproché de la poutre-support (6) jusque dans une position de transport (225) (figure 4) dans laquelle l'organe de protection (25) laisse apparaître la partie frontale des organes de coupe (21) et dans laquelle son encombrement est réduit.

Grâce à cette caractéristique particulièrement intéressante de cette faucheuse (1) selon l'invention, le conducteur du tracteur (2) a un champ de vision arrière latéral plus large et peut à tout moment voir avec précision la position de la partie frontale des organes de coupe (21).

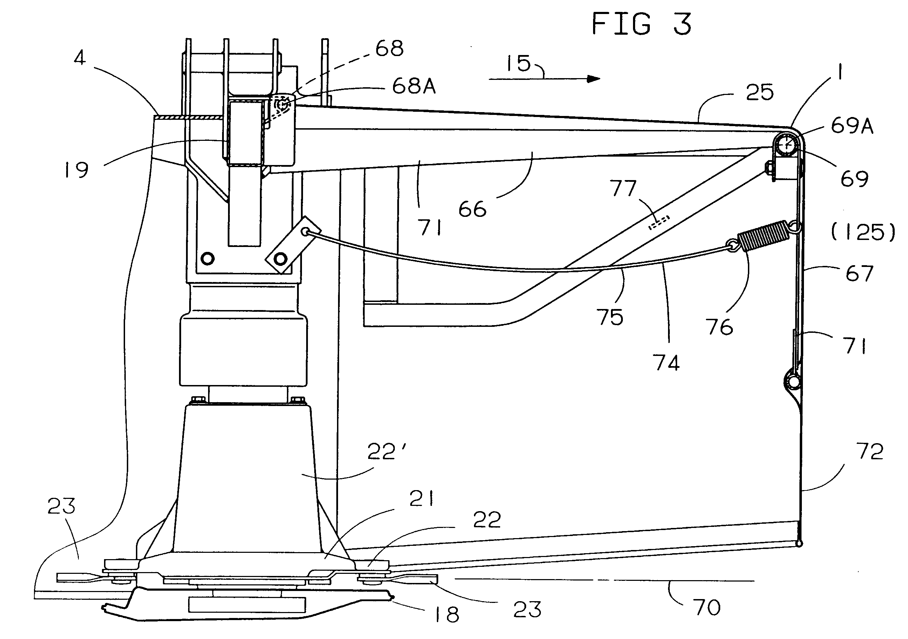

Le passage de l'organe de protection (25) de sa position de travail (125) dans sa position de transport (225) s'effectue automatiquement lors du relevage du mécanisme de récolte (4) grâce à deux éléments de manoeuvre (73, 74). Le premier élément de manoeuvre (73) s'étend entre la partie supérieure (66) de l'organe de protection (25) et la poutre-support (6). Dans cet exemple de réalisation selon l'invention, ledit premier élément de manoeuvre (73) est implanté plus précisément entre l'avant de l'extrémité intérieure de ladite partie supérieure (66) et la partie médiane de la poutre-support (6). De plus, son point de liaison (77) avec l'organe de protection (25) est implanté, en vue de dessus, entre les axes géométriques (16A, 17A) desdites première et deuxième articulations (16, 17). Le deuxième élément de manoeuvre (74), quant à lui, s'étend entre la partie frontale (67) de l'organe de protection (25) et la structure porteuse (19) du mécanisme de récolte (4). Dans cet exemple de réalisation selon l'invention, ce deuxième élément de manoeuvre (74) est implanté au moins sensiblement aux trois quarts de la hauteur de la partie frontale (67) (figure 3) et s'étend au moins sensiblement suivant la direction de travail (15). En sus, en vue de dessus, le deuxième élément de manoeuvre (74) est agencé dans le voisinage de l'extrémité intérieure (24) du mécanisme de récolte (4).

Par ailleurs, dans cet exemple de réalisation selon l'invention, chaque élément de manoeuvre (73, 74) se compose d'un câble (75) fixé à un ressort (76). Dans la position de dépose et la position de travail, les câbles (75) et les ressorts (76) sont détendus, l'utilisateur a donc la possibilité de relever manuellement les deux parties (66, 67) de l'organe de protection (25) lorsqu'il le désire.

Lorsque le mécanisme de récolte (4) est pivoté vers le haut au moyen du vérin de relevage (42), le point de liaison (77) du premier élément de manoeuvre (73) avec la partie supérieure (66) de l'organe de protection (25) se déplace vers le bas. Ce faisant, le câble (75) correspondant se tend et fait pivoter la partie supérieure (66) autour de l'axe géométrique (68A) de la troisième articulation (68) vers la poutre-support (6). Dès que la partie supérieure (66) de l'organe de protection (25) bute, le cas échéant, contre l'organe de retenue (62), ce qui empêche la poursuite du pivotement, le ressort (76) du premier élément de manoeuvre (73) s'allonge jusqu'à ce que le mécanisme de récolte (4) arrive dans sa position relevée de transport.

En sus, durant le pivotement de la partie supérieure (66) de l'organe de protection (25), la quatrième articulation (69) se rapproche aussi de la poutre-support (6). Ce faisant, le câble (75) du deuxième élément de manoeuvre (74) agit sur la partie frontale (67) de l'organe de protection (25) et la pivote autour de l'axe géométrique (69A) de ladite quatrième articulation (69) en direction de la partie supérieure (66). Lorsque la partie frontale (67) arrive en bout de course, le ressort (76) correspondant s'allonge jusqu'à ce que le mécanisme de récolte (4) soit totalement relevé.

En pratique, la position exacte de transport (225) de l'organe de protection (25) est en fait une position d'équilibre dans laquelle les actions exercées par les ressorts (76) sur l'organe de protection (25) s'annulent avantageusement. Dans cette position d'équilibre, l'organe de protection (25) est proche de l'organe de retenue (62).

Les ressorts (76) présentent encore d'autres avantages. En effet, ils autorisent aussi des tolérances de fabrication et de montage assez larges qui sont compensées par un allongement desdits ressorts (76) plus ou moins important.

D'autre part, l'organe de protection (25) est maintenu dans sa position de transport (225) de manière élastique ce qui permet à l'utilisateur de pivoter momentanément l'organe de protection (25) autour des articulations (68, 69).

Du reste, lorsque le mécanisme de récolte (4) est amené de sa position de transport dans sa position de travail, il va de soi que l'organe de protection (25) se replace automatiquement dans sa position de travail (125) sous l'action de son poids propre.

Finalement, différentes modifications restent possibles, notamment en ce qui concerne la constitution des divers éléments ou par substitution d'équivalents techniques, sans pour autant sortir du domaine de protection défini par les revendications.

## Revendications

1. Faucheuse (1) comportant:
- une structure d'attelage (5) destinée à être liée au dispositif d'attelage (9') d'un véhicule moteur (2);
- un mécanisme de coupe (4) s'étendant, au travail, transversalement à la direction de travail (15) et comprenant des organes de coupe (21) ainsi qu'une structure porteuse (19) qui est implantée, en vue suivant la direction de travail (15), au-dessus desdits organes de coupe (21);
- une poutre-support (6) liée d'une part à la structure d'attelage (5) à l'aide d'une première articulation (16) d'axe géométrique (16A) dirigé vers l'avant et d'autre part au mécanisme de coupe (4) à l'aide d'une deuxième articulation (17) d'axe géométrique (17A) dirigé vers l'avant;
- un organe de manoeuvre (42) servant à amener le mécanisme de coupe (4) dans une position relevée de transport par pivotement autour de l'axe géométrique (17A) de la deuxième articulation (17);
- un organe de protection (25) servant, dans une position de travail (125), à masquer les organes de coupe (21) et comportant deux parties (66, 67), une partie supérieure (66) relativement rigide articulée à la structure porteuse (19) du mécanisme de coupe (4) au moyen d'une troisième articulation (68) d'axe géométrique (68A) dirigé au moins sensiblement suivant l'axe longitudinal de ladite structure porteuse (19), et une partie frontale (67) liée à l'avant de la partie supérieure (66);
et
- au moins un élément de manoeuvre (73, 74) destiné à amener l'organe de protection (25) de sa position de travail (125) dans une position de transport (225), ledit élément de manoeuvre (73, 74) ou l'un (73) au moins desdits éléments de manoeuvre (73, 74) étant agencé de façon à pivoter, lors de la mise en position de transport, ladite partie supérieure (66) autour de l'axe géométrique (68A) de ladite troisième articulation (68) pour réduire l'encombrement de l'organe de protection (25);
***caractérisée en ce que*** la partie frontale (67) est également relativement rigide et est articulée à l'avant de ladite partie supérieure (66) à l'aide d'une quatrième articulation (69) d'axe géométrique (69A) au moins sensiblement parallèle à l'axe géométrique (68A) de la troisième articulation (68), et que ledit élément de manoeuvre (73, 74) ou l'un (74) au moins desdits éléments de manoeuvre (73, 74) est agencé de façon à pivoter, lors de la mise en position de transport, ladite partie frontale (67) autour de l'axe géométrique (69A) de ladite quatrième articulation (69) vers ladite partie supérieure (66).

2. Faucheuse selon la revendication 1, ***caractérisée en ce qu'***au travail la partie supérieure (66) s'étend au moins sensiblement horizontalement alors que la partie frontale (67) pend au moins sensiblement verticalement vers le bas, et qu'au transport la partie supérieure (66) est pivotée vers la poutre-support (6).

3. Faucheuse selon la revendication 1 ou 2, ***caractérisée en ce qu*****'**en vue de dessus l'axe géométrique (68A) de la troisième articulation (68) s'étend au moins sensiblement dans le prolongement de la poutre-support (6).

4. Faucheuse selon l'une au moins des revendications 1 à 3, ***caractérisée en ce que*** lesdites parties (66, 67) de l'organe de protection (25) sont amenées de leur position de travail (125) dans leur position de transport (225) au moyen d'au moins deux éléments de manoeuvre (73, 74).

5. Faucheuse selon la revendication 4, ***caractérisée en ce qu*****'**un premier élément de manoeuvre (73) est implanté entre la partie supérieure (66) de l'organe de protection (25) et la poutre-support (6).

6. Faucheuse selon la revendication 5, ***caractérisée en ce que*** ce premier élément de manoeuvre (73) est lié à l'extrémité de la partie supérieure (66) de l'organe de protection (25) en regard de la poutre-support (6) en un point de liaison (77) implanté, en vue de dessus entre les axes géométriques (16A, 17A) desdites première et deuxième articulations (16, 17).

7. Faucheuse selon l'une au moins des revendications 4 à 6, ***caractérisée en ce qu*****'**un deuxième élément de manoeuvre (74) est implanté entre la partie frontale (67) de l'organe de protection (25) et la structure porteuse (19) de l'organe de protection (25).

8. Faucheuse selon la revendication 7, ***caractérisée en ce que*** ce deuxième élément de manoeuvre (74) est implanté au moins sensiblement aux trois quarts de la hauteur de la partie frontale (67) de l'organe de protection (25) et s'étend au moins sensiblement suivant la direction de travail (15).

9. Faucheuse selon l'une au moins des revendications 1 à 8, ***caractérisée en ce que*** ledit élément de manoeuvre (73, 74) ou l'un au moins desdits éléments de manoeuvre (73, 74) comporte un câble (75).

10. Faucheuse selon l'une au moins des revendications 1 à 9, ***caractérisée en ce que*** ledit élément de manoeuvre (73, 74) ou l'un au moins desdits éléments de manoeuvre (73, 74) comporte un élément élastiquement déformable (76).

11. Faucheuse selon l'une au moins des revendications 1 à 10, ***caractérisée en ce que*** l'organe de protection (25) est amené automatiquement de sa position de travail (125) dans sa position de transport (225) lors du relevage du mécanisme de coupe (4).

12. Faucheuse selon l'une au moins des revendications 1 à 11, ***caractérisée en ce qu'***au transport, l'organe de protection (25) laisse apparaître la partie frontale des organes de coupe (21), qui s'étend en-dehors de la voie du véhicule moteur (2).

13. Faucheuse selon l'une au moins des revendications 1 à 12, ***caractérisée en ce que*** l'organe de manoeuvre (42) comporte un vérin s'étendant entre la structure d'attelage (5) et le mécanisme de coupe (4).

14. Faucheuse selon l'une au moins des revendications 1 à 13, ***caractérisée en ce que*** la première articulation (16) peut être pivotée par rapport à la structure d'attelage (5) autour d'un axe géométrique supplémentaire (13A) dirigé vers le haut.

15. Faucheuse selon la revendication 14, ***caractérisée en ce que*** la poutre-support (6) est liée à la structure d'attelage (5) au moyen d'un bras de positionnement (10) et d'un organe de retenue (62), l'ensemble formant, en vue de dessus, un quadrilatère déformable permettant, en vue du transport, de ramener la poutre-support (6) vers le plan médian du véhicule moteur (2) tout en pivotant ladite poutre-support (6) vers l'arrière.

16. Faucheuse selon l'une au moins des revendications 1 à 15, ***caractérisée en ce que*** c'est une faucheuse à disques (22), avec ou sans organes de traitement (20) du produit coupé.

## Claims

1. Mower (1) including:
- a hitching structure (5) intended to be connected to the hitching device (9') of a motor vehicle (2);
- a cutting mechanism (4) which, during work, extends transversely to the direction of work (15) and which comprises cutting members (21) as well as a carrying structure (19) which, viewed in the direction of work (15), is fitted above the said cutting members (21);
- a support beam (6) connected on the one hand to the hitching structure (5) by means of a first articulation (16) of forwards-pointing geometric axis (16A) and, on the other hand, to the cutting mechanism (4) by means of a second articulation (17) of forwards-pointing geometric axis (17A);
- an operating element (42) used to bring the cutting mechanism (4) into a raised position for transport by pivoting about the geometric axis (17A) of the second articulation (17);
- a protecting element (25) which, in a work position (125) serves to conceal the cutting members (21) and has two parts (66, 67), a relatively rigid upper part (66) articulated to the carrying structure (19) of the cutting mechanism (4) by means of a third articulation (68) of geometric axis (68A) pointing at least substantially along the longitudinal axis of the said carrying structure (19), and a front part (67) connected to the front of the upper part (66);
and
- at least one operating member (73, 74) intended to bring the protecting element (25) from its work position (125) into a transport position (225), the said operating member (73, 74) or at least one (73) of the said operating members (73, 74) being arranged so as to pivot the said upper part (66) about the geometric axis (68A) of the said third articulation (68) when bringing into the position for transport, in order to reduce the overall size of the protecting element (25);
***characterized in that*** the front part (67) is also relatively rigid and is articulated to the front of the said upper part (66) by means of a fourth articulation (69) of geometric axis (69A) at least substantially parallel to the geometric axis (68A) of the third articulation (68) and that the said operating member (73, 74) or at least one (74) of the said operating members (73, 74) is arranged so as to pivot the said front part (67) about the geometric axis (69A) of the said fourth articulation (69) towards the said upper part (66) when bringing into the position for transport.

2. Mower according to Claim 1, ***characterized in that*** during work the upper part (66) extends at least substantially horizontally while the front part (67) hangs at least substantially vertically downwards, and that in transport, the upper part (66) is pivoted towards the support beam (6).

3. Mower according to Claim 1 or 2, ***characterized in that*** viewed from above, the geometric axis (68A) of the third articulation (68) extends at least substantially in line with the support beam (6).

4. Mower according to at least one of Claims 1 to 3, ***characterized in that*** the said parts (66, 67) of the protecting element (25) are brought from their work position (125) into their position (225) for transport by means of at least two operating members (73, 74).

5. Mower according to Claim 4, ***characterized in that*** a first operating member (73) is fitted between the upper part (66) of the protecting element (25) and the support beam (6).

6. Mower according to Claim 5, ***characterized in that*** the first operating member (73) is connected to the end of the upper part (66) of the protecting element (25) opposite the support beam (6) at a connection point (77) which, viewed from above, is fitted between the geometric axes (16A, 17A) of the said first and second articulations (16, 17).

7. Mower according to at least one of Claims 4 to 6, ***characterized in that*** a second operating member (74) is fitted between the front part (67) of the protecting element (25) and the carrying structure (19) of the protecting element (25).

8. Mower according to Claim 7, ***characterized in that*** the second operating member (74) is fitted at least substantially three quarters of the way along the height of the front part (67) of the protecting element (25) and extends at least substantially in the work direction (15).

9. Mower according to at least one of Claims 1 to 8, ***characterized in that*** the said operating member (73, 74), or at least one of the said operating members (73, 74) includes a cable (75).

10. Mower according to at least one of Claims 1 to 9, ***characterized in that*** the said operating member (73, 74) or at least one of the said operating members (73, 74) includes an elastically deformable member (76).

11. Mower according to at least one of Claims 1 to 10, ***characterized in that*** the protecting element (25) is automatically brought from its work position (125) into its position (225) for transport when the cutting mechanism (4) is raised.

12. Mower according to at least one of Claims 1 to 11, ***characterized in that*** in transport, the protecting element (25) reveals the front part of the cutting members (21), which extends beyond the gauge width of the motor vehicle (2).

13. Mower according to at least one of Claims 1 to 12, ***characterized in that*** the operating element (42) includes a ram extending between the hitching structure (5) and the cutting mechanism (4).

14. Mower according to at least one of Claims 1 to 13, ***characterized in that*** the first articulation (16) can be pivoted with respect to the hitching structure (5) about an additional upwards-pointing geometric axis (13A).

15. Mower according to Claim 14, ***characterized in that*** the support beam (6) is connected to the hitching structure (5) by means of a positioning arm (10) and of a retaining member (62), the assembly, viewed from above, forming a deformable quadrilateral making it possible, for transport, to bring the support beam (6) towards the mid-plane of the motor vehicle (2), while pivoting the said support beam (6) backwards.

16. Mower according to at least one of Claims 1 to 15, ***characterized in that*** it is a disc mower with or without members (20) for treating the cut product.

## Patentansprüche

1. Mähmaschine (1), die
- eine Kupplungsvorrichtung (5), die mit der Kupplungseinrichtung (9') eines Motorfahrzeugs (2) verbunden werden soll;
- einen Schneidmechanismus (4), der sich im Betrieb quer zur Arbeitsrichtung (15) erstreckt und Schneidelemente (21) sowie ein Traggestell (19) umfaßt, die, in Arbeitsrichtung (15) gesehen, über den Schneidelementen (21) angebracht ist;
- einen Träger (6), der einerseits mit Hilfe eines ersten Gelenks (16) mit einer nach vorne ausgerichteten geometrischen Achse (16A) mit der Kupplungsvorrichtung (5) und andererseits mit Hilfe eines zweiten Gelenks (17) mit einer nach vorne ausgerichteten geometrischen Achse (17A) mit dem Schneidmechanismus (4) verbunden ist;
- ein Betätigungsglied (42), das dazu dient, den Schneidmechanismus (4) durch Schwenken um die geometrische Achse (17A) des zweiten Gelenks (17) in eine angehobene Transportposition zu bringen;
- ein Schutzglied (25), das in einer Arbeitsposition (125) dazu dient, die Schneidelemente (21) zu verdecken, und zwei Teile (66, 67) aufweist, einen relativ starren oberen Teil (66), der mittels eines dritten Gelenks (68) mit einer geometrischen Achse (68A), die zumindest im wesentlichen entlang der Längsachse des Traggestells (19) ausgerichtet ist, an dem Traggestell (19) des Schneidmechanismus (4) angelenkt ist, und einen Frontteil (67), der mit dem vorderen Teil des oberen Teils (66) verbunden ist;
und
- mindestens ein Betätigungselement (73, 74), das das Schutzglied (25) aus seiner Arbeitsposition (125) in eine Transportposition (225) bringen soll, wobei das Betätigungselement (73, 74) oder mindestens eines (73) der Betätigungselemente (73, 74) so angeordnet ist, daß es bei der Positionierung für den Transport den oberen Teil (66) um die geometrische Achse (68A) des dritten Gelenks (68) schwenken kann, um den Platzbedarf des Schutzglieds (25) zu vermindern;
umfaßt,
**dadurch gekennzeichnet,** daß der Frontteil (67) ebenfalls relativ starr ist und mit Hilfe eines vierten Gelenks (69) mit einer geometrischen Achse (69A), die zumindest im wesentlichen parallel zur geometrischen Achse (68A) des dritten Gelenks (68) verläuft, an den vorderen Teil des oberen Teils (66) angelenkt ist, und daß das Betätigungselement (73, 74) oder mindestens eines (74) der Betätigungselemente (73, 74) so angeordnet ist, daß es bei der Positionierung für den Transport den Frontteil (67) um die geometrische Achse (69A) des vierten Gelenks (69) zum oberen Teil (66) hin schwenken kann.

2. Mähmaschine nach Anspruch 1, ***dadurch gekennzeichnet,*** daß sich der obere Teil (66) im Betrieb zumindest im wesentlichen horizontal erstreckt, während der Frontteil (67) zumindest im wesentlichen vertikal nach unten hängt, und daß der obere Teil (66) beim Transport zum Träger (6) hin geschwenkt ist.

3. Mähmaschine nach Anspruch 1 oder 2, ***dadurch gekennzeichnet,*** daß sich die geometrische Achse (68A) des dritten Gelenks (68), von oben gesehen, zumindest im wesentlichen in der Verlängerung des Trägers (6) erstreckt.

4. Mähmaschine nach mindestens einem der Ansprüche 1 bis 3, ***dadurch gekennzeichnet,*** daß die Teile (66, 67) des Schutzglieds (25) mittels mindestens zwei Betätigungselementen (73, 74) aus ihrer Arbeitsposition (125) in ihre Transportposition (225) gebracht werden.

5. Mähmaschine nach Anspruch 4, ***dadurch gekennzeichnet,*** daß ein erstes Betätigungselement (73) zwischen dem oberen Teil (66) des Schutzglieds (25) und dem Träger (6) angebracht ist.

6. Mähmaschine nach Anspruch 5, ***dadurch gekennzeichnet,*** daß dieses erste Betätigungselement (73) mit dem Ende des oberen Teils (66) des Schutzglieds (25) gegenüber dem Träger (6) an einem Verbindungspunkt (77), verbunden ist, der, von oben gesehen, zwischen den geometrischen Achsen (16A, 17A) des ersten und zweiten Gelenks (16, 17) angebracht ist.

7. Mähmaschine nach mindestens einem der Ansprüche 4 bis 6, ***dadurch gekennzeichnet,*** daß ein zweites Betätigungselement (74) zwischen dem Frontteil (67) des Schutzglieds (25) und dem Traggestell (19) des Schutzglieds (25) angebracht ist

8. Mähmaschine nach Anspruch 7, ***dadurch gekennzeichnet,*** daß dieses zweite Betätigungselement (74) zumindest im wesentlichen auf drei Viertel der Höhe des Frontteils (67) des Schutzglieds (25) angebracht ist und sich zumindest im wesentlichen entlang der Arbeitsrichtung (15) erstreckt.

9. Mähmaschine nach mindestens einem der Ansprüche 1 bis 8, ***dadurch gekennzeichnet,*** daß das Betätigungselement (73, 74) oder mindestens eines der Betätigungselemente (73, 74) ein Kabel (75) umfaßt.

10. Mähmaschine nach mindestens einem der Ansprüche 1 bis 9, ***dadurch gekennzeichnet,*** *daß* das Betätigungselement (73, 74) oder mindestens eines der Betätigungselemente (73, 74) ein elastisch verformbares Element (76) umfaßt.

11. Mähmaschine nach mindestens einem der Ansprüche 1 bis 10, ***dadurch gekennzeichnet,** daß* das Schutzglied (25) beim Anheben des Schneidmechanismus (4) automatisch aus seiner Arbeitsposition (125) in seine Transportposition (225) gebracht wird.

12. Mähmaschine nach mindestens einem der Ansprüche 1 bis 11, ***dadurch gekennzeichnet,** daß* das Schutzglied (25) beim Transport den Frontteil der Schneidelemente (21), der sich außerhalb der Spurweite des Motorfahrzeugs (2) erstreckt, nicht verdeckt.

13. Mähmaschine nach mindestens einem der Ansprüche 1 bis 12, ***dadurch gekennzeichnet,*** daß das Betätigungsglied (42) einen Zylinder umfaßt, der sich zwischen der Kupplungsvorrichtung (5) und dem Schneidmechanismus (4) erstreckt.

14. Mähmaschine nach mindestens einem der Ansprüche 1 bis 13, ***dadurch gekennzeichnet,*** daß das erste Gelenk (16) bezüglich der Kupplungsvorrichtung (5) um eine zusätzliche geometrische Achse (13A), die nach oben gerichtet ist, geschwenkt werden kann.

15. Mähmaschine nach Anspruch 14, ***dadurch gekennzeichnet,** daß* der Träger (6) mittels eines Positionierarmes (10) und eines Haltegliedes (62) mit der Kupplungsvorrichtung (5) verbunden ist, wobei der Aufbau, von oben gesehen, ein verformbares Viereck bildet, das es im Hinblick auf den Transport gestattet, den Träger (6) zur mittleren Ebene des Motorfahzeugs (2) hin zurückzubringen und gleichzeitig nach hinten zu schwenken.

16. Mähmaschine nach mindestens einem der Ansprüche 1 bis 15, ***dadurch gekennzeichnet,*** daß es sich um eine Scheibenmähmaschine gegebenenfalls mit Gliedern (20) zur Behandlung des Schnittgutes handelt.
